# EUROPEAN PATENT APPLICATION

(11) **EP 4 844 382 A1**
(43) Date of publication of application: **25.11.2026**
(21) Application number: 25901582.4
(22) Date of filing: 04.11.2025
(51) Int. Cl.: G01N 21/88, G01N 21/892, G01N 21/84, G01N 21/95

(54) **SYSTEM AND METHOD FOR ELECTRODE INSPECTION**

(30) Priority: 03.12.2024 KR 20240176989
(71) Applicant: LG Energy Solution, Ltd., Seoul 07335 (KR)
(72) Inventor: KANG, Seungwon, Daejeon 34122 (KR); LEE, Haesung, Daejeon 34122 (KR)
(74) Representative: Goddar, Heinz J.
(86) International application number: PCT/KR2025/017870
(87) International publication number: WO 2026/121587

(57) **Abstract**

An electrode inspection system according to an embodiment of the present invention may comprise: an optical system for photographing the upper surface and the side surface of an electrode sheet traveling in one direction to generate an upper surface image and a side surface image of the electrode sheet; and an electrode inspection device which uses the side surface image to detect a burr protruding in a vertical direction of the electrode sheet, and uses the upper surface image to determine whether the electrode sheet is warped and adjust the position of the optical system.

## Description

### [Technical Field]

This application claims priority to and the benefit of Korean Patent Application No.10-2024-0176989 filed in the Korean Intellectual Property Office on December 3, 2024 the entire contents of which are incorporated herein by reference.

The present disclosure relates to an electrode inspection system and method for batteries, and more specifically, to an electrode inspection system and method for determining whether an electrode sheet is defective using an image of the electrode sheet.

### [Background Art]

Secondary batteries, capable of recharging and reuse, may be used as an energy source for small devices such as mobile phones, tablet PCs and vacuum cleaners, and also used as an energy source for medium and large devices such as automobiles and an energy storage system (ESS) for smart grids.

Typically, secondary batteries are manufactured by housing an electrode assembly, which consists of a cathode, separator, and anode stacked in a repetitive pattern, within a case such as a cylindrical can or a prismatic pouch.

The cathode and anode are manufactured by processing metal current collectors (copper for the anode, aluminum for the cathode) to predetermined sizes, then coating their surfaces with cathode slurry or anode slurry, respectively, leaving a part of the end portions exposed.

Before being loaded into the case, the electrodes are cut to specified dimensions. For example, in a slitting process, the electrode sheet travels in a specific direction and may be cut to a predetermined width. As the slitting process involves a knife applying pressure vertically to cut the electrode sheet, burrs may form on the cut surface of the electrode sheet. These slitting burrs may potentially cause battery ignition and needs to be detected during the battery manufacturing process.

Among the prior art documents relevant to the present disclosure, KR 10-2023-0053517 A is of some relevance.

### [Detailed Description of the Invention]

### [Technical Problem]

To obviate one or more problems of the related art, embodiments of the present disclosure provide an electrode inspection system capable of detecting slitting burrs using images of the electrode sheet.

To obviate one or more problems of the related art, embodiments of the present disclosure also provide an electrode inspection method using the electrode inspection system.

To obviate one or more problems of the related art, embodiments of the present disclosure also provide an electrode inspection apparatus included in the electrode inspection system.

### [Technical Solution]

In order to achieve the objective of the present disclosure, an electrode inspection system may include an optical system configured to capture a top surface and a side of an electrode sheet traveling in one direction, thereby generating a top surface image and a side image of the electrode sheet; and an electrode inspection apparatus configured to detect one or more burrs protruding vertically from the electrode sheet using the side image, judge whether the electrode sheet exhibits meandering using the top surface image, and adjust the position of the optical system.

The optical system may include an upper image sensor generating the top surface image; a side image sensor generating the side image; and one or more reflective mirrors configured to guide light incident from the electrode sheet to the side image sensor.

The optical system may include a housing with an optical path formed therein and the upper image sensor is coupled to the top of the housing and the side image sensor is coupled to the side of the housing.

The one or more reflective mirrors may include a first reflective mirror coupled to the bottom of the housing, which reflects light incident from the side of the electrode sheet into the interior of the housing; and a second reflective mirror disposed within the housing, which reflects light reflected from the first reflective mirror toward the side image sensor.

The electrode inspection apparatus may further be configured to detect an edge line of the electrode sheet in the top surface image and determine whether the meandering of the electrode sheet has occurred based on the edge line.

The electrode inspection apparatus may further be configured to, when it is determined that meandering of the electrode sheet has occurred, move the position of the optical system in a direction corresponding to the meandering direction and adjust the focus of the side image sensor.

The electrode inspection apparatus may further be configured to identify a metal foil region in the side image and detect a burr region protruding from the metal foil region.

The electrode inspection apparatus may further be configured to determine whether the electrode sheet is defective based on one or more of the size and protrusion length of the burr region.

The electrode inspection apparatus may further be configured to create trend information including one or more of the burr occurrence location on the electrode sheet and the burr size per occurrence location and visualize and output the trend information via a predetermined Graphical User Interface (GUI).

According to another embodiment of the present disclosure, an electrode inspection method, performed by an electrode inspection system including an optical system and an electrode inspection apparatus linked with the optical system, may include capturing, by the optical system, images of the top surface and side of an electrode sheet traveling in one direction to generate a top surface image and a side image of the electrode sheet; and detecting, by the electrode inspection apparatus, one or more burrs protruding vertically from the electrode sheet using the side image.

The electrode inspection method may further include determining, by the electrode inspection apparatus, whether the electrode sheet exhibits meandering using the top surface image; and when it is determined that meandering of the electrode sheet has occurred, adjusting the position of the optical system.

The determining of whether the electrode sheet exhibits meandering using the top surface image may include detecting an edge line of the electrode sheet in the top surface image; and determining whether the meandering of the electrode sheet has occurred based on the edge line.

The adjusting of the position of the optical system may include moving the position of the optical system in a direction corresponding to the meandering direction to adjust the focus of the side image sensor included in the optical system.

The detecting of the burr may include identifying a metal foil region in the side image; and detecting a burr region protruding from the metal foil region.

The detecting of the burr may include judging whether the electrode sheet is defective based on one or more of the size and protrusion length of the burr region.

The method may further include generating trend information including one or more of the burr occurrence location on the electrode sheet and the burr size per occurrence location; and visualizing and outputting the trend information via a predetermined Graphical User Interface (GUI).

According to another embodiment of the present disclosure, an electrode inspection apparatus, linked to an optical system configured to capture images of the top surface and side of an electrode sheet traveling in one direction, may include at least one processor; and a memory configured to store at least one instruction executed by the at least one processor.

Here, the at least one instruction includes instructions to detect a burr protruding vertically from the electrode sheet using a side image of the electrode sheet received from the optical system; determine whether the electrode sheet exhibits meandering using a top surface image of the electrode sheet received from the optical system; and adjust the position of the optical system when it is determined that meandering of the electrode sheet has occurred.

### [Advantageous Effects]

According to embodiments of the present disclosure, it is possible to detect a slitting burr in real time by utilizing both the side view image and top view image of the electrode sheet captured simultaneously, thereby further improving the accuracy and time efficiency of the electrode inspection.

### [Brief Description of the Drawings]

FIG. 1 is a flowchart of the electrode manufacturing process.
FIG. 2 is a reference drawing for explaining the slitting burr.
FIG. 3 is a block configuration diagram of an electrode inspection system according to embodiments of the present disclosure.
FIG. 4 is a reference diagram for explaining the operation of the electrode inspection system according to embodiments of the present disclosure.
FIG. 5 is a block configuration diagram of an optical system according to embodiments of the present disclosure.
FIGS. 6 to 8 are examples of implementing the optical system according to embodiments of the present disclosure.
FIG. 9 is a flowchart of the operation of an electrode inspection method according to embodiments of the present disclosure.
FIG. 10 is a reference diagram for illustrating a burr detection method according to embodiments of the present disclosure.
FIG. 11 is a reference diagram for illustrating trend information according to embodiments of the present disclosure.
FIG. 12 is a flowchart of the operation sequence of the position adjustment method for the optical system according to embodiments of the present disclosure.
FIG. 13 is reference images for explaining the method for determining the presence of meandering according to embodiments of the present disclosure.
FIG. 14 is a block configuration diagram of an electrode inspection apparatus according to embodiments of the present disclosure.

10: Electrode sheet
100: Optical system
200: Electrode inspection apparatus
1400: Electrode inspection apparatus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein are for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

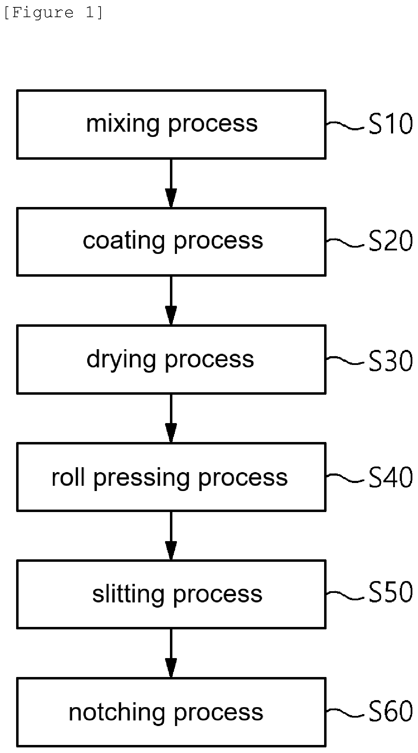

FIG. 1 is a flowchart of the electrode manufacturing process.

As shown in FIG. 1, the electrode manufacturing process for a secondary battery may proceed through a mixing process (S10), a coating process (S20), a drying process (S30), a roll pressing process (S40), a slitting process (S50), and a notching process (S60).

The mixing process (S10) is a process for mixing electrode raw materials. Here, the electrode material may include a cathode active material or an anode active material. Known materials may be used as the electrode material and the mixing process may produce a liquid electrode material.

The coating process (S20) is a process in which a liquid electrode material is coated on a sheet. Here, the sheet may refer to a metal foil formed from a metal material such as aluminum or copper. The coating device is installed in the sheet's travel path and may apply the liquid electrode material to the traveling sheet. Through the coating process, a coated portion where the electrode material is applied and an uncoated portion where the electrode material is not applied may be formed in the sheet.

Hereinafter, the sheet coated with the electrode material is referred to as an "electrode sheet".

The drying process (S30) is a process for drying the electrode material.

The roll pressing process (S40) is a process for rolling the dried electrode material onto the electrode sheet.

The slitting process (S50) is a process for cutting the electrode sheet in the running direction, which is the longitudinal direction of the electrode sheet. The slitter device performing the slitting process may cut the electrode sheet in the longitudinal direction to ensure it is cut to the preset electrode width specification.

The notching process (S60) is a process for machining the electrode sheet to form a tab portion and a predetermined shape.

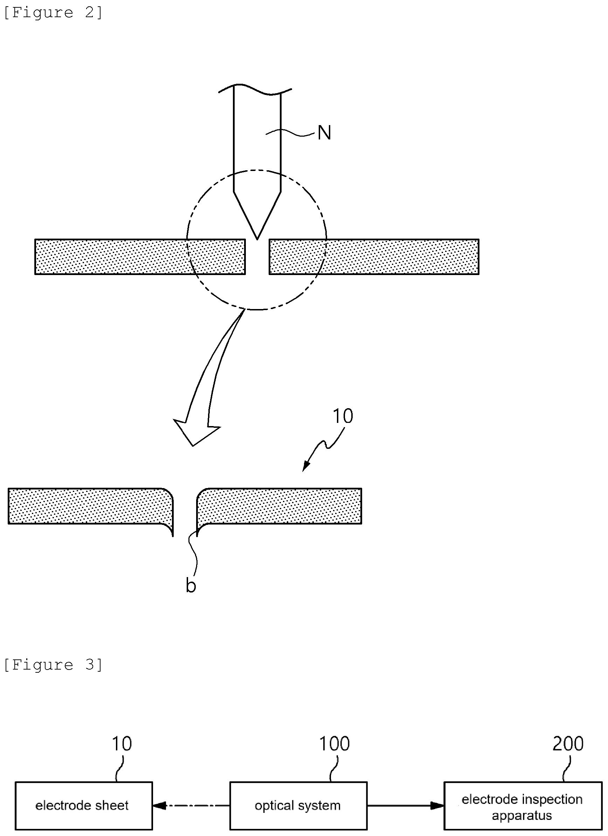

FIG. 2 is a reference drawing for explaining the slitting burr.

In the slitting process, the electrode sheet travels in a predetermined direction and may be cut to a specified width specification. Specifically, the slitting process may be performed as shown in FIG. 2, wherein a knife (N) applies pressure to the electrode sheet 10 in a vertical direction to cut it.

During this slitting process, if the knife (N) wears out or its shape deforms, the electrode sheet 10 may be cut unevenly, causing a burr (b) to form on the cut surface of the electrode sheet 10. Subsequently, as the cutting action of the knife (N) repeats , the slitting burr (b) continuously forms.

This slitting burr (b) may potentially cause battery ignition, necessitating more accurate detection of the slitting burr (b) during the battery manufacturing process. However, there are limitations to accurately detecting the slitting burr on an electrode sheet that is currently in motion.

Hereinafter, with reference to the accompanying drawings, the present disclosure and various embodiments thereof will be described in detail.

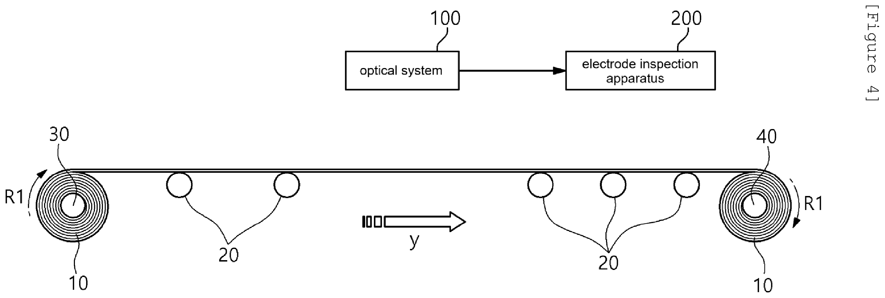

FIG. 3 is a block configuration diagram of an electrode inspection system according to embodiments of the present disclosure, and FIG. 4 is a reference diagram for explaining the operation of the electrode inspection system according to embodiments of the present disclosure.

Referring to FIG. 3, the electrode inspection system may include an optical system 100 and an electrode inspection apparatus 200.

The optical system 100 is a device for capturing images of the top surface and side of the electrode sheet 10. Here, the optical system 100 may generate top surface images and side images of specific areas of the electrode sheet 10 and provide them to the electrode inspection apparatus 200.

The optical system 100 may include an upper image sensor that generates an upper surface image of the electrode sheet 10 and a side image sensor that generates a side image of the electrode sheet 10.

The optical system 100 may capture the top surface and side of the electrode sheet 10 traveling in one direction. Here, the optical system 100 may generate top surface images and side images per unit time.

Specifically, as shown in FIG. 4, the electrode sheet 10 may be transported along the transport direction (y) by the transport unit 20. Here, the transport unit 20 may guide the electrode sheet 10 from the unwinder unit 30 to the rewinder unit 40.

The optical system 100 is positioned along the travel path of the electrode sheet 10 and may simultaneously capture images of the side and top surface of the electrode sheet 10. Here, the optical system 100 may generate top surface images and side images at each unit time (e.g., 10 ms) and transmit them to the electrode inspection apparatus 200.

Referring again to FIG. 3, the electrode inspection apparatus 200 may detect burrs generated on the electrode sheet 10 using the top surface image and side image received from the optical system 100. Here, a burr may refer to a protrusion extending vertically from the horizontal plane of the electrode sheet 10.

The electrode inspection apparatus 200 may determine whether burrs have formed on the electrode sheet 10 by identifying a burr region protruding vertically from the electrode sheet 10 in the side image. For example, the electrode inspection apparatus 200 may use a predetermined image analysis algorithm to identify a metal foil region in the side view image and detect a burr region protruding from the metal foil region.

The electrode inspection apparatus 200 may determine whether the electrode sheet is defective based on one or more of the size and protrusion length of the burr region. For example, if the area of a burr region detected in the side image exceeds a predetermined threshold area, or if the vertical length of the burr region exceeds a predetermined threshold length, the corresponding electrode sheet 10 may be judged as defective.

The electrode inspection apparatus 200 may determine whether the electrode sheet 10 exhibits meandering (lateral deviation) using the top surface image. If meandering of the electrode sheet 10 is determined to have occurred, the position of the optical system 100 may be adjusted to adjust the focus of the side image sensor. Here, the electrode inspection apparatus 200 may transmit a position adjustment signal to the control device of the sliding unit supporting the optical system 100, thereby moving the position of the optical system 100.

The meandering (lateral deviation) of the electrode sheet 10 may mean that the electrode sheet 10 moves partially in a direction (x) perpendicular to the travel direction (y) while traveling. If meandering of the electrode sheet 10 occurs, the focus of the side image sensor capturing the side of the electrode sheet 10 changes, potentially degrading the quality of the side image. To prevent this image quality degradation, the electrode inspection apparatus 200 analyzes the top surface image to monitor whether the electrode sheet 10 is meandered. When meandering occurs, the electrode inspection apparatus may move the position of the optical system 100 in a direction corresponding to the meandering direction to adjust the focus of the side image sensor.

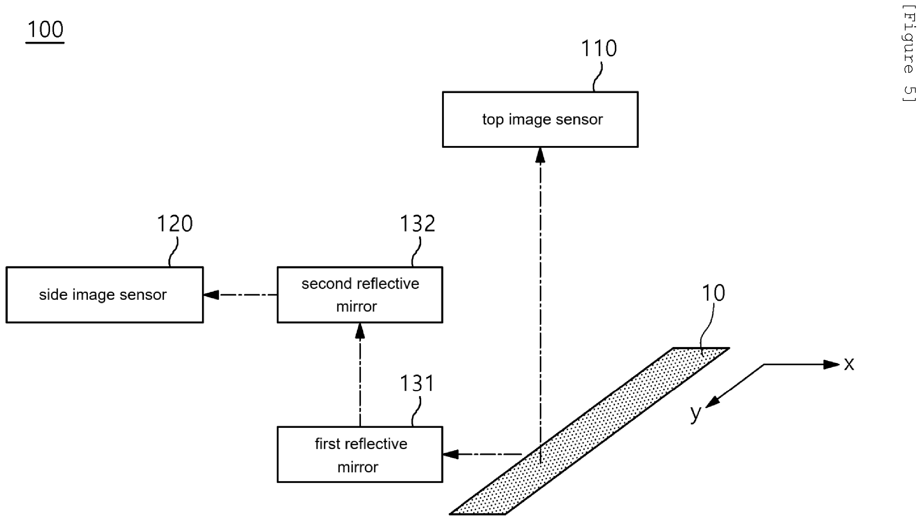

FIG. 5 is a block configuration diagram of an optical system according to embodiments of the present disclosure.

Referring to FIG. 5, the optical system 100 may include an upper image sensor 110, a side image sensor 120, and one or more reflective mirrors. Here, the one or more reflective mirrors may include a first reflective mirror 131 and a second reflective mirror 132.

The optical system 100 may simultaneously capture the top surface and side of an electrode sheet 10 traveling in one direction (y), thereby generating a top surface image and a side image.

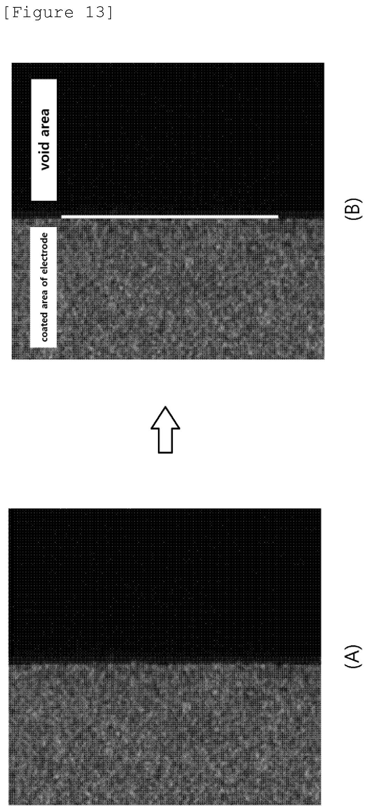

The upper image sensor 110 may generate a top surface image (see Fig. 13(A)) by capturing a portion of the top surface , including the cut surface of the electrode sheet 10.

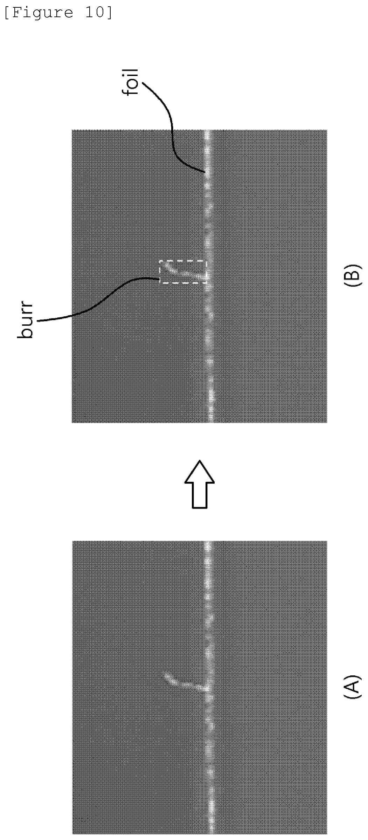

The side image sensor 120 may generate a side image (see Fig. 10(A)) by capturing an image of a portion of the side area of the electrode sheet 10.

One or more reflective mirrors may be arranged to guide light incident from the side of the electrode sheet 10 to the side image sensor 120. For example, as shown in FIG. 5, a first reflective mirror 131 positioned on the side of the electrode sheet 10 reflects light incident from the side of the electrode sheet 10 toward the second reflective mirror 132, and the second reflective mirror 132 may reflect light incident from the first reflective mirror 131 toward the side image sensor 120. The side image sensor 120 may receive light incident from the second reflective mirror 132 to generate an image of the side of the electrode sheet 10.

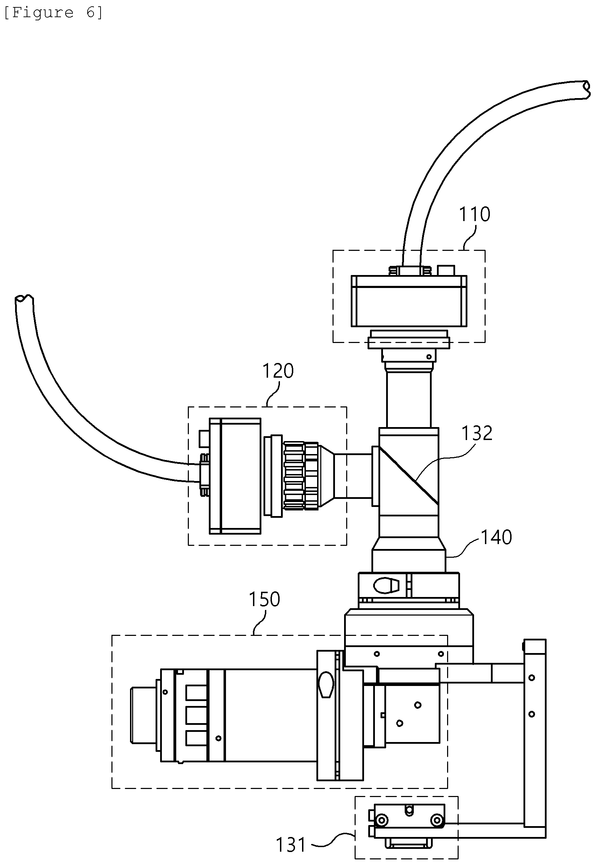

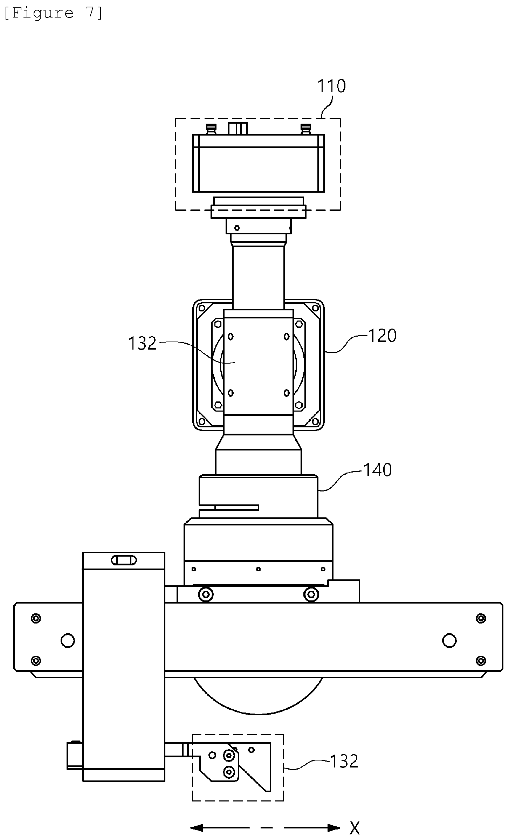

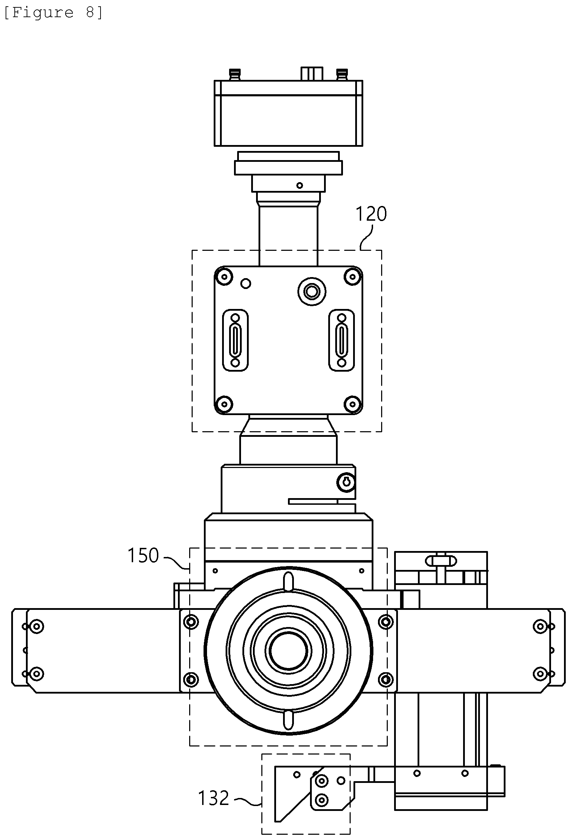

FIGS. 6 to 8 are examples of implementing the optical system according to embodiments of the present disclosure. Here, FIG. 6 is a front view of the optical system, FIG. 7 is a right side view of the optical system, and FIG. 8 is a left side view of the optical system.

Referring to Figures 6 through 8, the optical system may include a housing 140 having a specific shape, within which an optical path is formed. Here, the upper image sensor 110 may be fixedly coupled to the top of the housing 140, and the side image sensor 120 may be fixedly coupled to the side of the housing 140.

A first reflective mirror 131 is coupled to the bottom of the housing 140 and may reflect light incident from the side of the electrode sheet 10 into the interior of the housing 140.

A second reflective mirror 132 is disposed inside the housing 140 and may reflect light reflected from the first reflective mirror 131 toward the side image sensor 120.

An illumination unit 150 may be coupled to the bottom of the housing 140 to irradiate uniform surface light toward the first reflective mirror 131. Here, the illumination unit 150 may be a coaxial illumination device.

A portion of the housing 140 may be coupled to a sliding unit (not shown) and may be moved by the sliding unit in the x-axis direction (a direction perpendicular to the travel direction).

As shown in Figures 6 to 8, the upper image sensor 110, side image sensor 120, a first reflective mirror 131, a second reflective mirror 132, a housing 140, and an illumination unit 150 included in the optical system 100 may be formed integrally. When the optical system 100 is moved in the x-axis direction (a direction perpendicular to the travel direction) by the sliding unit, the distance between the first reflective mirror 131 and the electrode sheet 10 changes, allowing the focus of the side image sensor 120 to be adjusted.

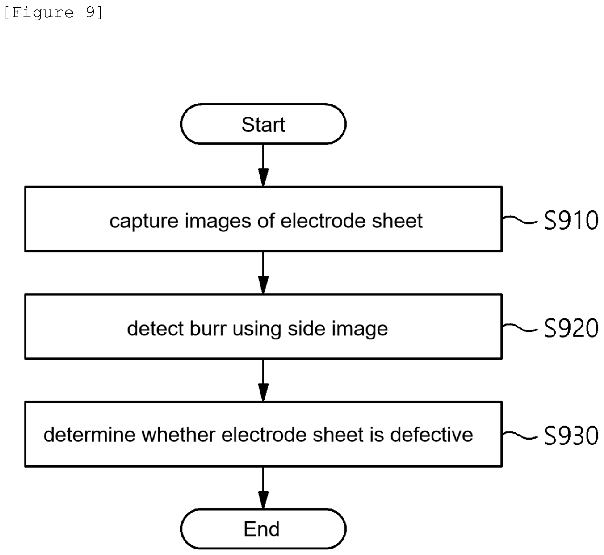

FIG. 9 is a flowchart of the operation of an electrode inspection method according to embodiments of the present disclosure.

The optical system may simultaneously capture the top surface and side of the electrode sheet traveling in one direction (S910), thereby generating a top surface image and a side image of the electrode sheet. Here, the optical system may generate the top surface image and the side image every unit time (e.g., 10 ms).

The electrode inspection apparatus may detect one or more burrs protruding vertically from the electrode sheet using the side image of the electrode sheet (S920).

FIG. 10 is a reference diagram for illustrating a burr detection method according to embodiments of the present disclosure. Referring to FIG. 10, the electrode inspection apparatus may identify a metal foil region (A) in the side image received from the optical system and detect a burr region (B) protruding from the metal foil region. Here, the electrode inspection apparatus may determine the metal foil region and burr region in the side image (A) using a predetermined image analysis algorithm. For example, based on the gray level for each pixel in the side image (A), the electrode inspection apparatus may detect a metal area and determine a metal foil region having a vertical line shape and a burr region protruding from the metal foil region.

Referring again to FIG. 9, the electrode inspection apparatus may determine whether the electrode sheet is defective based on one or more of the size and protrusion length of the burr region (S930). For example, if the area of the burr region detected in the side image exceeds a predetermined threshold area, or if the vertical length of the burr region exceeds a predetermined threshold length, the corresponding electrode sheet may be judged as defective.

The electrode inspection apparatus may generate trend information including at least one of the burr occurrence location on the electrode sheet and the burr size at each occurrence location. Subsequently, the electrode inspection apparatus may visualize the trend information and output it via a predetermined Graphical User Interface (GUI).

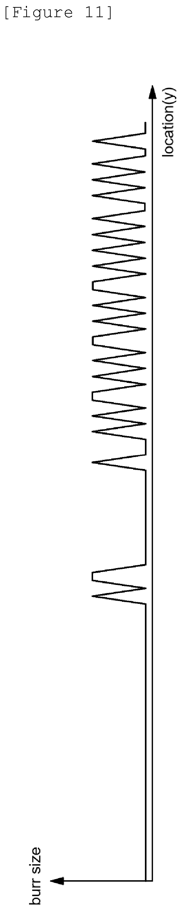

FIG. 11 is a reference diagram for illustrating trend information according to embodiments of the present disclosure.

Referring to FIG. 11, the electrode inspection apparatus may collect inspection information, including the locations where burrs occur and the burr size at each occurrence location, based on the lengthwise direction (or traveling direction) of the electrode sheet. Subsequently, the electrode inspection apparatus may visualize the burr occurrence locations on the electrode sheet and the burr size at each occurrence location in a two-dimensional graph format and output it via a display device.

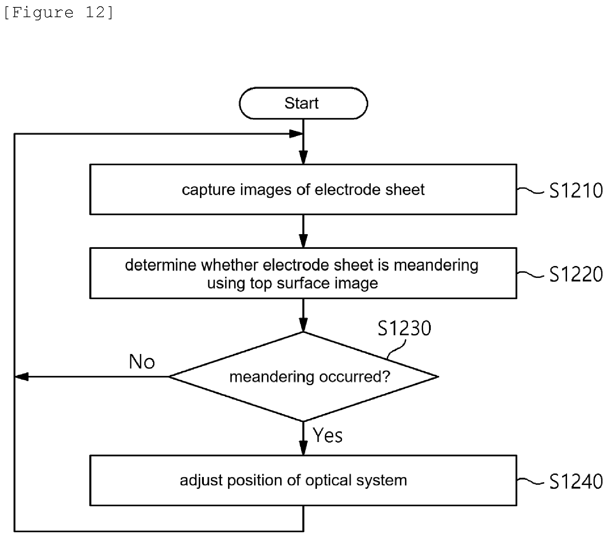

FIG. 12 is a flowchart of the operation sequence of the position adjustment method for the optical system according to embodiments of the present disclosure.

The optical system may simultaneously capture images of the top surface and side of the electrode sheet traveling in one direction (S1210), thereby generating a top surface image and a side image of the electrode sheet. Here, the optical system may generate the top surface image and the side image at each unit time (e.g., 10 ms).

The electrode inspection apparatus may determine whether the electrode sheet is meandering using the top surface image of the electrode sheet (S1220). Here, meandering of the electrode sheet may mean that the electrode sheet is traveling while partially displaced in a direction (x) perpendicular to the travel direction (y).

FIG. 13 is reference images for explaining the method for determining the presence of meandering according to embodiments of the present disclosure.

Referring to FIG. 13, the electrode inspection apparatus may detect (B) the edge line of the electrode sheet in the top surface image (A) received from the optical system. Here, the electrode inspection apparatus may detect (B) the edge line in the top surface image (A) using a predetermined image analysis algorithm. For example, based on the gray level of each pixel in the top surface image (A), the coated area of electrode and the void area may be identified, and the boundary line between the coated area of electrode and the void area may be defined as the edge line.

Subsequently, the electrode inspection apparatus may monitor the x-coordinate of the electrode sheet end based on the edge lines detected in each of the multiple top surface images. Here, if the distance between the x-coordinate of the electrode sheet end and a preset reference coordinate is greater than or equal to a set distance, it can be determined that meandering of the electrode sheet has occurred.

Referring again to FIG. 12, if it is determined that meandering of the electrode sheet has occurred (Y in S1230), the electrode inspection apparatus may adjust the position of the optical system in a direction corresponding to the meandering direction to adjust the focus of the side image sensor (S1240). Here, the electrode inspection apparatus may transmit a position adjustment signal, including the movement direction and movement distance, to the control device of the sliding unit supporting the optical system to move the position of the optical system.

As shown in FIGS. 6 to 8, since the optical system according to embodiments of the present disclosure is formed integrally, when the optical system is moved by the sliding unit in a direction corresponding to the meandering direction, the distance between the first reflective mirror 131 and the electrode sheet 10 changes, thereby allowing the focus of the side image sensor 120 to be adjusted.

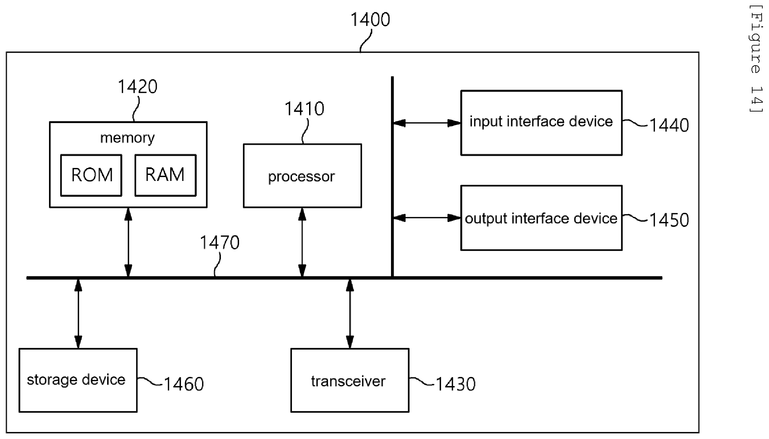

FIG. 14 is a block configuration diagram of an electrode inspection apparatus according to embodiments of the present disclosure.

The electrode inspection apparatus 1400 according to embodiments of the present disclosure may be linked with an optical system that captures images of the top surface and side of an electrode sheet traveling in one direction.

The electrode inspection apparatus 1400 may include at least one processor 1410, a memory 1420 storing at least one command executed by the processor, and a transceiver 1430 connected to a network for performing communication.

The at least one command include a command for detecting burrs protruding in the vertical direction of the electrode sheet using a side image of the electrode sheet received from the optical system; a command for determining whether the electrode sheet exhibits meandering using a top surface image of the electrode sheet received from the optical system; and a command for adjusting the position of the optical system, if it is determined that meandering of the electrode sheet has occurred.

The command for determining whether the electrode sheet exhibits meandering may include: a command for detecting an edge line of the electrode sheet in the top surface image; and a command for determining whether the meandering of the electrode sheet has occurred based on the edge line.

The command for adjusting the position of the optical system may include a command for moving the position of the optical system in a direction corresponding to the meandering direction to adjust the focus of the side image sensor included in the optical system.

The command for detecting the burr may include a command for identifying a metal foil region in the side image; and a command for detecting a burr region protruding from the metal foil region.

The command for detecting the burr may include a command for determining whether the electrode sheet is defective based on one or more of the size and protrusion length of the burr region.

The at least one command may further include a command for generating trend information including one or more of the burr occurrence location on the electrode sheet and the burr size per occurrence location; and a command for visualizing and outputting the trend information through a predetermined Graphical User Interface (GUI).

The electrode inspection apparatus 1400 may further include an input interface device 1440, an output interface device 1450, a storage device 1460, etc. Respective components included in the electrode inspection apparatus 1400 may be connected by a bus 1470 and can communicate with each other.

Here, the processor 1410 may mean a central processing unit (CPU), a graphics processing unit (GPU), or a dedicated processor on which methods according to embodiments of the present disclosure are performed. Furthermore, the memory may include one or more of a volatile/transitory recording medium and a nonvolatile/non-transitory recording medium. For example, the memory may include at least one of a read-only memory (ROM) and a random access memory (RAM), and may include an Electrically Erasable Programmable Read-only Memory (EEPROM).

The operations of the method according to the embodiments of the present disclosure may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

The operations of the method according to embodiments of the present disclosure may be implemented in various forms related to programs, such as a computer program or code itself, or a computer program product.

Furthermore, the computer-readable recording medium may include one or more of a volatile/transitory recording medium and a non-volatile/non-transitory recording medium.

In addition, the computer-readable recording medium may include hardware devices specially configured to store and execute program instructions, such as ROM, RAM, flash memory, and may include, for example, various types of servers located on a network. The program instructions may include not only machine language codes, such as those created by a compiler, but also high-level language codes that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the foregoing, the present disclosure has been described with reference to the exemplary embodiment of the present disclosure, but those skilled in the art may appreciate that the present disclosure may be variously corrected and changed within the range without departing from the spirit and the area of the present disclosure described in the appending claims.

## Claims

1. An electrode inspection system comprising:
an optical system configured to capture images of a top surface and a side of an electrode sheet traveling in one direction, thereby generating a top surface image and a side image of the electrode sheet; and
an electrode inspection apparatus configured to detect one or more burrs protruding vertically from the electrode sheet using the side image, judge whether the electrode sheet exhibits meandering using the top surface image, and adjust the position of the optical system.

2. The electrode inspection system of claim 1, wherein the optical system includes:
an upper image sensor generating the top surface image;
a side image sensor generating the side image; and
one or more reflective mirrors configured to guide light incident from the electrode sheet to the side image sensor.

3. The electrode inspection system of claim 2, wherein the optical system includes:
a housing with an optical path formed therein,
wherein the upper image sensor is coupled to the top of the housing and the side image sensor is coupled to the side of the housing.

4. The electrode inspection system of claim 3, wherein the one or more reflective mirrors includes:
a first reflective mirror coupled to the bottom of the housing, which reflects light incident from the side of the electrode sheet into the interior of the housing; and
a second reflective mirror disposed within the housing, which reflects light reflected from the first reflective mirror toward the side image sensor.

5. The electrode inspection system of claim 1, the electrode inspection apparatus is further configured to:
detect an edge line of the electrode sheet in the top surface image and determine whether the meandering of the electrode sheet has occurred based on the edge line.

6. The electrode inspection system of claim 2, the electrode inspection apparatus is further configured to:
when it is determined that meandering of the electrode sheet has occurred, move the position of the optical system in a direction corresponding to the meandering direction and adjust the focus of the side image sensor.

7. The electrode inspection system of claim 1, wherein the electrode inspection apparatus is further configured to:
identify a metal foil region in the side image and detect a burr region protruding from the metal foil region.

8. The electrode inspection system of claim 7, wherein the electrode inspection apparatus is further configured to:
determine whether the electrode sheet is defective based on one or more of the size and protrusion length of the burr region.

9. The electrode inspection system of claim 7, wherein the electrode inspection apparatus is further configured to:
generate trend information including one or more of the burr occurrence location on the electrode sheet and the burr size per occurrence location; and
visualize and output the trend information via a predetermined Graphical User Interface (GUI).

10. An electrode inspection method, performed by an electrode inspection system including an optical system and an electrode inspection apparatus linked with the optical system, the method comprising:
capturing, by the optical system, images of the top surface and side of an electrode sheet traveling in one direction to generate a top surface image and a side image of the electrode sheet; and
detecting, by the electrode inspection apparatus, one or more burrs protruding vertically from the electrode sheet using the side image.

11. The method of claim 10, further comprising:
determining, by the electrode inspection apparatus, whether the electrode sheet exhibits meandering using the top surface image; and
when it is determined that meandering of the electrode sheet has occurred, adjusting the position of the optical system.

12. The method of claim 11, wherein the determining of whether the electrode sheet exhibits meandering using the top surface image includes:
detecting an edge line of the electrode sheet in the top surface image; and
determining whether the meandering of the electrode sheet has occurred based on the edge line.

13. The method of claim 11, wherein the adjusting of the position of the optical system includes:
moving the position of the optical system in a direction corresponding to the meandering direction to adjust the focus of the side image sensor included in the optical system.

14. The method of claim 10, wherein the detecting of the burr includes:
identifying a metal foil region in the side image; and
detecting a burr region protruding from the metal foil region.

15. The method of claim 14, wherein the detecting of the burr includes:
judging whether the electrode sheet is defective based on one or more of the size and protrusion length of the burr region.

16. The method of claim 15, further comprising:
generating trend information including one or more of the burr occurrence location on the electrode sheet and the burr size per occurrence location; and
visualizing and outputting the trend information via a predetermined Graphical User Interface (GUI).

17. An electrode inspection apparatus, linked to an optical system configured to capture images of the top surface and side of an electrode sheet traveling in one direction, the apparatus comprising:
at least one processor; and
a memory configured to store at least one instruction executed by the at least one processor,
wherein the at least one instruction includes instructions to:
detect a burr protruding vertically from the electrode sheet using a side image of the electrode sheet received from the optical system;
determine whether the electrode sheet exhibits meandering using a top surface image of the electrode sheet received from the optical system; and
when it is determined that meandering of the electrode sheet has occurred, adjust the position of the optical system.
